# EUROPÄISCHE PATENTSCHRIFT

(11) **EP 4 379 141 B1**
(45) Veröffentlichungstag und Bekanntmachung des Hinweises auf die Patenterteilung: **04.03.2026**
(21) Anmeldenummer: 22210411.9
(22) Anmeldetag: 30.11.2022
(51) Int. Cl.: E01C 19/48, B60L 53/00, B60S 5/02

(54) **STRASSENBAUMASCHINE UND EINBAUZUG MIT STRASSENBAUMASCHINE UND MOBILER VERSORGUNGSMASCHINE**
ROAD CONSTRUCTION MACHINE AND PAVING SYSTEM WITH ROAD CONSTRUCTION MACHINE AND MOBILE SUPPLY MACHINE
ENGIN DE CONSTRUCTION ROUTIÈRE ET TRAIN DE MACHINES DOTÉ D'UN ENGIN DE CONSTRUCTION ROUTIÈRE ET D'UN ENGIN D'ALIMENTATION MOBILE

(43) Veröffentlichungstag der Anmeldung: 05.06.2024
(73) Patentinhaber: Joseph Vögele AG, 67067 Ludwigshafen (DE)
(72) Erfinder: Draxler, Daniel, 69198 Schriesheim (DE)
(74) Vertreter: Grünecker Patent- und Rechtsanwälte PartG mbB

(56) Entgegenhaltungen:
- EP-A1- 4 098 479
- WO-A1-2020/089668
- DE-A1- 102015 225 789
- DE-A1- 102021 109 293
- US-A1- 2021 008 997

## Beschreibung

Die Erfindung bezieht sich auf eine Straßenbaumaschine in Form eines Straßenfertigers oder eines Beschickers zum Fördern von Einbaumaterial zu einem Straßenfertiger sowie auf einen Einbauzug umfassend eine Straßenbaumaschine und eine mobile Versorgungsmaschine, auf ein Verfahren zum Betreiben des Einbauzugs und auf eine Verwendung einer Schnittstelle einer Straßenbaumaschine.

Ein derartiger Straßenfertiger ist aus der EP 1 118 714 B1 bekannt und ein derartiger Beschicker geht aus der EP 2 110 341 A1 hervor.

EP 4 098 479 A1 betrifft Servicefahrzeuge für Straßenbaustellen und Straßenbaumaschinen, die an ein Servicefahrzeug andocken können.

US 2021 / 008 997 A1 zeigt ein Einbausystem, das ein Steuersystem umfasst, das für die Steuerung der Betankung und/oder des Nachladens verschiedener Maschinen konfiguriert ist.

Herkömmliche Straßenbaumaschinen verwenden üblicherweise einen Dieselkraftstoff als Energiequelle. Die chemische Energie des Dieselkraftstoffs wird über einen Dieselmotor in mechanische Energie umgewandelt, mit welcher Aktuatoren betrieben werden. Die Aktuatoren führen dann üblicherweise rotatorische Bewegungen oder translatorische Bewegungen aus. Mittels dieser Bewegungen führt die Straßenbaumaschine dann ihre Arbeit und Teilaufgaben aus. Dies wäre für einen Straßenfertiger z.B. Fahren, Lenken, Material fördern, Material verteilen, Nivellieren, Material verdichten. Für ein Beschickerfahrzeug wären dies z.B. Fahren, Lenken, Material fördern. Rotationsbewegungen werden beispielsweise mit Hilfe von Hydraulikmotoren umgesetzt, translatorische Bewegungen beispielsweise durch Hydraulikzylinder. Für die Bohlenheizung eines Straßenfertigers wird mechanische Energie über einen Generator in elektrische Energie umgewandelt, diese wird dann in Wärme umgewandelt. Nachteilig an diesem Antriebsmechanismus sind die Verwendung fossiler Brennstoffe (z.B. Dieselkraftstoff) und die damit verbundenen Abgasemissionen.

Dahingegen ist bei elektrifizierten Straßenbaumaschinen die geringere Reichweite des Einbauzugs problematisch. Derzeitige Straßenfertiger mit Dieseltank sind so ausgelegt, dass diese mit einer Tankfüllung ungefähr 10 Stunden lang angetrieben werden und eine bestimmte Reichweite erreichen können. Dabei wird von einer hohen bis maximalen Auslastung des Straßenfertigers ausgegangen. Beim Einsatz eines Energiespeichers für einen elektrifizierten Straßenfertiger, wie beispielsweise eines Akkumulators (Akku) bzw. einer Batterie als Energiequelle und elektrischer Antriebsstränge, müssten zum Erreichen ähnlicher Reichweiten deutlich größere und schwerere Energiespeicher eingesetzt werden, aufgrund der geringeren Energiedichte eines Akkus im Vergleich zu der Energiedichte von Dieselkraftstoff. Da dies nur in begrenztem Maße realisiert werden kann, ohne den Straßenfertiger drastisch zu vergrößern, folgt in Konsequenz eine deutliche Einschränkung der Arbeitszeit bzw. Arbeitsmenge, die ein Straßenfertiger mit einer Energiespeicher-Ladung erbringen kann. Deshalb müsste der Akku ein- oder mehrmalig getauscht bzw. nachgeladen werden, aufgrund geringerer Reichweite eines elektrifizierten Straßenfertigers mit einem Akku als Energiequelle. Alternativ müsste der Straßenfertiger mit dem leeren Akku von der Baustelle weggefahren werden, damit als Ersatz ein anderer Straßenfertiger mit einem geladenen Akku eingesetzt werden kann. Folglich müsste die Baustelle kurzzeitig oder für einen längeren Zeitraum unterbrochen werden. Das Unterbrechen der Baustelle ist nicht nur nachteilig für die Energieeffizienz (z.B. müssen die Bohle und die Materialförderer nach der Unterbrechung wieder aufgewärmt werden), sondern auch für die Einbauqualität. Denn Unterbrechungen führen potenziell zu Anfahrmarken, Entmischung, Temperaturabfall des Mischguts, Verdichtungsproblemen, bis hin zum Erkalten und Verfestigen des Einbaumaterials im Straßenfertiger.

Es ist die Aufgabe der vorliegenden Erfindung, die oben genannten Nachteile zu beseitigen oder zumindest zu reduzieren.

Diese Aufgabe wird durch die Straßenbaumaschine gemäß Anspruch 1 oder den Einbauzug gemäß Anspruch 7 oder das Verfahren gemäß Anspruch 11 oder die Verwendung gemäß Anspruch 14 gelöst.

Die Erfindung betrifft eine Straßenbaumaschine in Form eines Straßenfertigers oder eines Beschickerfahrzeugs zum Fördern von Einbaumaterial zu einem Straßenfertiger, wobei die Straßenbaumaschine selbstfahrend ist und ein Primärantrieb, einen Materialbunker, mindestens einen elektrischen Verbraucher, und mindestens einen Energiemitteltank aufweist. Die Straßenbaumaschine ist über eine Schnittstelle zur Übertragung von Energiemittel, bevorzugt Kraftstoff, Diesel, Erdgas, Wasserstoff oder zum Betreiben der galvanischen Zellen erforderliche Flüssigkeiten, mit der mobilen Versorgungsmaschine, insbesondere mit einer Verbindungseinheit der mobilen Versorgungsmaschine, verbindbar. Die Schnittstelle ist an einem Andockende der Straßenbaumaschine, bevorzugt an einer Schubeinrichtung der Straßenbaumaschine, angeordnet. Durch die Erfindung kann eine lokale Baustelle geschaffen werden, auf der die Straßenbaumaschinen nur mit alternativen Energien betrieben werden kann. Dadurch können die Abgasemissionen auf der Baustelle reduziert werden oder komplett verhindert werden. Solche Baustellen sind insbesondere in Innenstädten, in Tunneln oder in Gebäuden erwünscht. Einer der weiteren Vorteile der Erfindung ist eine Verlängerung der Einsatzzeit und der Reichweite einer fahrenden Straßenbaumaschine, denn der Straßenbaubetrieb muss nicht gestoppt werden, wenn der Straßenbaumaschine Energiemittel ausgeht. Auch kann die Erfindung Unterbrechungen im Einbau reduzieren und damit die Einbauqualität verbessern. Durch die Schnittstelle kann die Straßenbaumaschine an der mobilen Versorgungsmaschine mechanisch angeschlossen werden. Die Straßenbaumaschine kann die mobile Versorgungsmaschine durch die mechanische Verbindung in einer Fahrtrichtung, beispielsweise in Einbaurichtung, schieben. Während einer gemeinsamen Fahrt der Straßenbaumaschine mit der mobilen Versorgungsmaschine kann Einbaumaterial und Energiemittel von der mobilen Versorgungsmaschine auf die Straßenbaumaschine transportiert werden. Über die Schnittstelle der mobilen Versorgungsmaschine können Energiemittel von einem Energiemitteltank der mobilen Versorgungsmaschine auf einen Energiemitteltank der Straßenbaumaschine übertragen werden. Die Energiemittel können über eine Rohrleitung bzw. über eine korrosionsfeste Rohrleitung übertragen werden. Einer der Eingänge der Rohrleitung kann an der Schnittstelle und einer der Eingänge kann an der Verbindungseinheit angeschlossen sein. Die Rohrleitung kann unter dem Materialbunker einem Energiemitteltank zugeführt werden.

Vorzugsweise weist die Straßenbaumaschine eine weitere Schnittstelle auf. Die Straßenbaumaschine ist über die weitere Schnittstelle zur Übertragung von elektrischer Energie mit der mobilen Versorgungsmaschine, bzw. mit einer weiteren Verbindungseinheit der mobilen Versorgungsmaschine verbindbar. Durch die weitere Schnittstelle kann die Straßenbaumaschine an der mobilen Versorgungsmaschine andocken oder umgekehrt. Durch die weitere Schnittstelle kann die Straßenbaumaschine an der mobilen Versorgungsmaschine mechanisch und/oder elektrisch angeschlossen werden. Die Straßenbaumaschine kann die mobile Versorgungsmaschine durch die mechanische Verbindung in eine Fahrtrichtung, beispielsweise in Einbaurichtung, schieben. Während einer gemeinsamen Fahrt der Straßenbaumaschine mit der mobilen Versorgungsmaschine kann Einbaumaterial und Energie bzw. elektrische Energie von der mobilen Versorgungsmaschine auf die Straßenbaumaschine transportiert werden. An der weiteren Schnittstelle kann ein Stromkreis angeschlossen sein. Eine an der weiteren Schnittstelle angeschlossene elektrische Leitung kann an dem Energiespeicher und/oder an einem der elektrischen Verbraucher angeschlossen sein. Die elektrische Leitung kann unter dem Materialbunker an einem Energiespeicher oder einem der elektrischen Verbraucher in einem Isolierschlauch zugeführt werden.

Ein Energiemittel kann ein Energieträger sein. Energiemittel können von der mobilen Versorgungsmaschine auf die Straßenbaumaschine übertragen werden. Ein Energiemittel kann eine zur Energieerzeugung erforderlichen Flüssigkeit für galvanische Zellen, beispielsweise ein Elektrolyt sein. Ein Energiemittel kann ein Kraftstoff für Brennstoffzellen, beispielsweise Wasserstoff sein. Der Primärantrieb der Straßenbaumaschine kann ein Wasserstoffverbrennungsmotor sein. Wasserstoff als Energiemittel kann von der mobilen Versorgungsmaschine auf die Straßenbaumaschine übertragen werden. Ein Energiemittel kann ein Kraftstoff wie Benzin oder Diesel sein. Der Primärantrieb der Straßenbaumaschine kann ein Hybridantrieb, umfassend beispielsweise einen Elektromotor und einen Dieselmotor, sein. Diesel kann als Energiemittel von der mobilen Versorgungsmaschine auf die Straßenbaumaschine übertragen werden. Der Energiespeicher kann eine Batterie oder ein Akkumulator (Akku) bzw. ein Lithium-Ionen-Akkumulator sein.

Durch die Verbindung der Schnittstelle mit der Verbindungseinheit kann die Straßenbaumaschine an die mobile Versorgungseinheit Kraft übertragen. Durch die Verbindung der Schnittstelle mit der Verbindungseinheit kann die mobile Versorgungseinheit an die Straßenbaumaschine Kraft übertragen. Die Schnittstelle der Straßenbaumaschine kann ein elektromechanisches Bauteil sein. Die Verbindungseinheit der mobilen Versorgungsmaschine kann ein elektromechanisches Bauteil sein. Die Schnittstelle und die Verbindungseinheit können zusammengehörige elektromechanische Einheiten sein. Das elektromechanische Bauteil kann mindestens eine mechanische Komponente aufweisen. Das elektromechanische Bauteil kann mindestens einen Stromleiter aufweisen. Das elektromechanische Bauteil kann an seiner Außenseite mindestens teilweise mit einer isolierenden Hülle abgedeckt sein. Durch die Verbindung der Schnittstelle der Straßenbaumaschine und der Verbindungseinheit der mobilen Versorgungsmaschine kann ein elektrischer Stromkreis geschlossen oder getrennt werden. Das elektromechanische Bauteil kann einen männlichen Teil, bzw. einen Stecker aufweisen. Das elektromechanische Bauteil kann einen weiblichen Teil, bzw. eine Buchse aufweisen. Die Schnittstelle der Straßenbaumaschine kann einen Arretierungsmechanismus aufweisen, um die Schnittstelle und die Verbindungseinheit zumindest während der Energieübertragung und/oder Energiemittelübertragung miteinander mechanisch zu sichern. Die Verbindungseinheit der mobilen Versorgungsmaschine kann einen Arretierungsmechanismus aufweisen, um die Verbindungseinheit und die Schnittstelle zumindest während der Energieübertragung und/oder Energiemittelübertragung miteinander mechanisch zu sichern.

Bevorzugt ist die Straßenbaumaschine von der mobilen Versorgungsmaschine mit Einbaumaterial beladbar. Der Materialbunker der Straßenbaumaschine kann mittels von der mobilen Versorgungsmaschine gelieferten Einbaumaterials mindestens teilweise auffüllbar sein. Die mobile Versorgungsmaschine kann beispielweise ein Materialzulieferfahrzeug bzw. ein Liefer-LKW sein. Die mobile Versorgungsmaschine kann eine Materialmulde, bzw. einen Aufnahmebehälter, vorzugsweise einen kippbaren Vorratsbunker, aufweisen, um Einbaumaterial auf die Straßenbaumaschine zu transportieren. Der Vorteil davon ist die Mobilität des Liefer-LKW außerhalb der Baustelle und seine Austauschbarkeit innerhalb der Baustelle, ohne den Bauprozess unterbrechen zu müssen. Verwendung eines Liefer-LKWs als mobile Versorgungsmaschine kann auch die folgenden Vorteile schaffen. Ein Liefer-LKW kann zwischen einer Baustelle und einem Mischwerk und z.B. einer Stromladestation pendeln (es ist auch möglich, dass eine Stromladestation bei dem Mischwerk vorhanden ist), während die Straßenbaumaschine bzw. der Straßenfertiger kontinuierlich Material einbaut oder ein Beschickerfahrzeug kontinuierlich Einbaumaterial auf den Straßenfertiger transportiert. Dadurch kann die Straßenbaumaschine mit Einbaumaterial beladen werden, während die Straßenbaumaschine elektrisch aufgeladen wird. Die mobile Versorgungsmaschine kann einen Elektromotor und mindestens einen aufladbaren und austauschbaren Energiespeicher aufweisen, so dass die Baustelle frei von Abgasemissionen wird. Der Energiespeicher kann eine Batterie oder ein Akkumulator (Akku) bzw. ein Lithium-Ionen-Akkumulator oder ein Kondensator sein. Weiterhin kann die mobile Versorgungsmaschine die Straßenbaumaschine mit vorbeheiztem Einbaumaterial versorgen. Es ist vorstellbar, dass das Einbaumaterial in der mobilen Versorgungsmaschine, beispielweise während einer Fahrt zwischen einem Mischwerk und der Baustelle, schon aufgewärmt wird, bevorzugt auf eine Temperatur zwischen 30°C und 250°C, weiterhin bevorzugt auf eine Temperatur zwischen 60° C und 120 °C.

Vorteilhafterweise ist die weitere erste Schnittstelle an einem Andockende der Straßenbaumaschine angeordnet. Damit können beide Schnittstellen an eine an einer Andockseite des Fahrgestells der mobilen Versorgungsmaschine angeordneten Verbindungseinheit angeschlossen werden, so dass die Straßenbaumaschine die mobile Versorgungsmaschine während dem Aufbau eines Straßenbelags verschieben kann. Vorteilhafterweise kann der Aufbau des Straßenbelags ununterbrochen durchgeführt werden, während die Straßenbaumaschine kontinuierlich Material einbaut und von der mobilen Versorgungseinheit mit elektrischer Energie und/oder Energiemittel und/oder Einbaumaterial versorgt wird.

Bevorzugt sind die Schnittstelle und/oder die weitere Schnittstelle an einer Schubeinrichtung der Straßenbaumaschine angeordnet. Die Schubeinrichtung kann mindestens eine oder mehrere Schubrollen umfassen. Die Schubrollen können an einer Chassiskomponente wie z.B. einer Traverse, die an der Straßenbaumaschine angeordnet ist, angeordnet sein. Die Schubeinrichtung kann mittels einer Feder-Dämpfer-Einheit beweglich gelagert sein. Die Schnittstelle und/oder die weitere Schnittstelle können zwischen zwei drehbar gelagerten Schubrollen angeordnet sein. Beim Andocken der Schubrollen an die Reifen der mobilen Versorgungsmaschine können sich die Reifen elastisch verformen. Dadurch können Einbaufehler im Straßenbelag verhindert werden.

Zweckmäßig weist die Schnittstelle mindestens eine Öffnung auf, wobei die Öffnung zur Aufnahme einer Verbindungseinheit der mobilen Versorgungsmaschine geeignet ist. Die Verbindungseinheit kann sich von einem Fahrgestell der mobilen Versorgungsmaschine in einer Fahrtrichtung der mobilen Versorgungsmaschine erstrecken. Die Schnittstelle kann als ein Anhängmaul mit einer Rohröffnung ausgebildet sein. Die Verbindungseinheit kann als eine Abstandsstange mit einer Rohröffnung ausgebildet sein.

Zweckmäßig weisen die Schnittstelle und/oder die weitere Schnittstelle jeweils eine Öffnung zur Aufnahme einer Verbindungseinheit der mobilen Versorgungsmaschine auf. Zweckmäßig weist die weitere Schnittstelle mindestens eine Öffnung auf, wobei die Öffnung zur Aufnahme einer weiteren Verbindungseinheit der mobilen Versorgungsmaschine geeignet ist. Die weitere Schnittstelle kann mehrere Kontaktöffnungen aufweisen. Die weitere Verbindungseinheit kann eine mindestens in der ersten Öffnung aufnehmbare Stiftleiste aufweisen. Die weitere Verbindungseinheit kann sich von einem Fahrgestell der mobilen Versorgungsmaschine in einer Fahrtrichtung der mobilen Versorgungsmaschine erstrecken. Die weitere Schnittstelle kann als ein Anhängmaul ausgebildet sein. Die weitere Verbindungseinheit kann als eine Abstandsstange ausgebildet sein.

Vorteilhafterweise ist der Energiespeicher mit von der mobilen Versorgungsmaschine übertragener elektrischer Energie mindestens teilweise aufladbar. Die mobile Versorgungsmaschine kann in einem vorbestimmten Zeitraum eine Energie von 0,5 kWh bis 25 kWh, bevorzugt 1 kWh bis 10 kWh, weiter bevorzugt 2 kWh bis 5 kWh auf die Straßenbaumaschine übertragen. Vorteilhafterweise ist der Primärantrieb der Straßenbaumaschine direkt mit von der mobilen Versorgungsmaschine übertragener elektrischer Energie versorgbar. Dafür kann ein Stromversorgungspfad die weitere Schnittstelle direkt mit dem Primärantrieb der Straßenbaumaschine elektrisch verbinden.

Die Straßenbaumaschine kann ein Steuerungssystem aufweisen. Das Steuerungssystem kann dazu konfiguriert sein einen (elektrischen) Ladestand des Energiespeichers der Straßenbaumaschine zu überwachen. Das Steuerungssystem kann dazu konfiguriert sein, ein Übertragen von elektrischer Energie von der mobilen Versorgungsmaschine auf die Straßenbaumaschine zu veranlassen, wenn der Ladestand zwischen zwanzig Prozent und neunzig Prozent, bevorzugt zwischen dreißig Prozent und achtzig Prozent, ist. Das Steuerungssystem kann einen Laderegler aufweisen. Der Laderegler kann an dem Energiespeicher angeschlossen sein.

Die Erfindung bezieht sich weiterhin auf einen Einbauzug umfassend mindestens eine erfindungsgemäße Straßenbaumaschine, wobei der Einbauzug eine mobile Versorgungsmaschine mit mindestens einer Verbindungseinheit aufweist, wobei die Schnittstelle der Straßenbaumaschine mit der Verbindungseinheit der mobilen Versorgungsmaschine zur Energiemittelübertragung verbindbar ist.

Der Einbauzug kann zum Erstellen eines Straßenbelags sein. Der Einbauzug kann einen Straßenfertiger und eine dem Straßenfertiger voranfahrende mobile Versorgungsmaschine aufweisen. Der Einbauzug kann einen Straßenfertiger und ein dem Straßenfertiger voranfahrendes Beschickerfahrzeug und eine dem Beschickerfahrzeug voranfahrende mobile Versorgungsmaschine aufweisen. Vorteilhafterweise sind die Schnittstelle und die Verbindungseinheit zusammengehörige elektromechanische Bauteile.

Vorteilhafterweise ist die mobile Versorgungsmaschine ein Materialzulieferfahrzeug, insbesondere ein Materialzulieferfahrzeug zur Lieferung von Einbaumaterial, z.B. ein Liefer-LKW. Die mobile Versorgungsmaschine kann eine Materialmulde, bzw. einen Aufnahmebehälter, vorzugsweise einen kippbaren Vorratsbunker aufweisen, um Einbaumaterial auf die Straßenbaumaschine zu transportieren. Die Mobilität des Liefer-LKW außerhalb der Baustelle und seine Austauschbarkeit innerhalb der Baustelle kann vorteilhaft sein. Ein Liefer-LKW kann zwischen einer Baustelle und einem Mischwerk und z.B. einer Stromladestation pendeln (es ist auch möglich, dass eine Stromladestation bei dem Mischwerk vorhanden ist), während die Straßenbaumaschine kontinuierlich Material einbaut. Der elektrisch aufgeladene Liefer-LKW kann sich auf der Baustelle an die Straßenbaumaschine anschließen und Einbaumaterial auf den Materialbunker übertragen. Anschließend kann der Liefer-LKW von der Baustelle wieder abfahren, um wieder neu geladen und/oder betankt zu werden. Die mobile Versorgungsmaschine des Einbauzugs kann austauschbar sein. Es ist möglich, dass auf der Baustelle mehrere mobile Versorgungsmaschinen vorhanden sind, um unterbrechungsfreie Bauarbeiten zu gewährleisten. Es ist möglich, dass die mobilen Versorgungsmaschinen außerhalb der Baustelle mittels eines Verbrennungsmotors oder Hybridmotors angetrieben werden.

Vorteilhafterweise ist die mobile Versorgungsmaschine ein Materialzulieferfahrzeug, insbesondere ein Materialzulieferfahrzeug zur Lieferung von Einbaumaterial, z.B. ein Liefer-LKW.

In einer Variante der Erfindung ist ein Energiespeicher der mobilen Versorgungsmaschine mit dem bzw. gegen den Energiespeicher der Straßenbaumaschine austauschbar. Die mobile Versorgungsmaschine kann mindestens einen Energiespeicher, bevorzugt zwei Energiespeicher, weiter bevorzugt drei bis fünf Energiespeicher aufweisen, die insbesondere einzeln austauschbar sein können. Ein Modul mit mehreren Energiespeichern der mobilen Versorgungsmaschine kann an einem Beifahrersitz an einem Chassis oder an einem Fahrgestell der mobilen Versorgungsmaschine installierbar sein. Die Energiespeicher der mobilen Versorgungsmaschine können einzeln an einem freien Beifahrersitz installierbar sein.

Bevorzugt sind die Schnittstelle der Straßenbaumaschine und die Verbindungseinheit der mobilen Versorgungsmaschine zur elektromechanischen Kopplung miteinander geeignet. Vorteilhafterweise ist die mobile Versorgungsmaschine von der Straßenbaumaschine in einer Fahrtrichtung des Einbauzugs verschiebbar, insbesondere während der Energieübertragung und/oder Energiemittelübertragung.

Die Erfindung bezieht sich weiterhin auf ein Verfahren zum Betreiben eines Einbauzugs, umfassend mindestens eine Straßenbaumaschine in Form eines Straßenfertigers oder eines Beschickerfahrzeugs zum Fördern von Einbaumaterial zu einem Straßenfertiger, wobei die Straßenbaumaschine selbstfahrend ist und ein Primärantrieb, einen Materialbunker, mindestens einen elektrischen Verbraucher, sowie mindestens einen Energiemitteltank aufweist, wobei der Einbauzug eine mobile Versorgungsmaschine, bevorzugt eine mobile Versorgungsmaschine mit einer Materialmulde zur Lieferung von Einbaumaterial auf die Straßenbaumaschine, aufweist. Das Verfahren umfasst ein Verbinden einer Schnittstelle der Straßenbaumaschine mit einer Verbindungseinheit der mobilen Versorgungsmaschine zur Übertragung von Energiemittel, bevorzugt Kraftstoff, Diesel, Erdgas, Wasserstoff oder zum Betreiben der galvanischen Zellen erforderliche Flüssigkeiten, von der mobilen Versorgungsmaschine auf die Straßenbaumaschine. Die Schnittstelle ist an einem Andockende der Straßenbaumaschine, bevorzugt an einer Schubeinrichtung der Straßenbaumaschine, angeordnet.

Die Schnittstelle kann mit der Verbindungseinheit mechanisch verbunden werden. Die Straßenbaumaschine kann an der mobilen Versorgungsmaschine andocken. Die mobile Versorgungsmaschine kann durch die Straßenbaumaschine in einer Fahrtrichtung des Einbauzugs, insbesondere während der Übertragung von elektrischer Energie, verschoben werden. Das Verfahren kann ein Verbinden einer weiteren Schnittstelle der Straßenbaumaschine mit einer weiteren Verbindungseinheit der mobilen Versorgungsmaschine zur Übertragung von elektrischer Energie von der mobilen Versorgungsmaschine auf die Straßenbaumaschine umfassen. Das Verfahren kann ein Verbinden einer Schnittstelle der Straßenbaumaschine mit einer Verbindungseinheit der mobilen Versorgungsmaschine zur Übertragung von Einbaumaterial von der mobilen Versorgungsmaschine auf die Straßenbaumaschine umfassen.

Das Verfahren kann die folgenden Verfahrensschritte umfassen: Überwachen von einem ersten Ladestand eines Energiespeichers der Straßenbaumaschine, und Übertragen von elektrischer Energie von der mobilen Versorgungsmaschine auf die Straßenbaumaschine, wenn der erste Ladestand zwischen zwanzig Prozent und neunzig Prozent, bevorzugt zwischen dreißig Prozent und achtzig Prozent ist.

Die Erfindung bezieht sich weiterhin auf die Verwendung einer Schnittstelle einer Straßenbaumaschine zu einer mechanischen Verkopplung mit einer Verbindungseinheit einer mobilen Versorgungsmaschine für Energiemittelübertragung, wobei die Straßenbaumaschine über eine Schnittstelle zur Übertragung von Energiemittel, bevorzugt Kraftstoff, Diesel, Erdgas, Wasserstoff oder zum Betreiben der galvanischen Zellen erforderliche Flüssigkeiten, mit der mobilen Versorgungsmaschine verbindbar ist. Die Schnittstelle ist an einem Andockende der Straßenbaumaschine, bevorzugt an einer Schubeinrichtung der Straßenbaumaschine, angeordnet. Sämtliche Merkmale und Vorteile, die in Zusammenhang mit der Straßenbaumaschine offenbart sind, können einzeln oder zusammen in dem Einbauzug, in dem Verfahren oder in der Verwendung zum Einsatz kommen. Sämtliche Merkmale, die in Zusammenhang mit dem Verfahren offenbart sind, können einzeln oder zusammen in der Straßenbaumaschine, in dem Einbauzug oder in der Verwendung zum Einsatz kommen. Sämtliche Merkmale, die in Zusammenhang mit dem Einbauzug offenbart sind, können einzeln oder zusammen in der Straßenbaumaschine, in dem Verfahren oder in der Verwendung zum Einsatz kommen. Sämtliche Merkmale, die in Zusammenhang mit der Verwendung offenbart sind, können einzeln oder zusammen in der Straßenbaumaschine, in dem Verfahren oder in dem Einbauzug zum Einsatz kommen.

Im Folgenden werden Hintergrundsinformation und beispielhafte Ausführungsformen anhand der Figuren erläutert. Dabei zeigen
- Fig. 1 eine schematische Perspektivansicht einer Straßenbaumaschine in Form eines Straßenfertigers,
- Fig. 2 eine schematische Perspektivansicht einer Straßenbaumaschine in Form eines Beschickerfahrzeugs zum Fördern von Einbaumaterial zu einem Straßenfertiger,
- Fig. 3 eine schematische Perspektivansicht einer mobilen Versorgungsmaschine,
- Fig. 4 eine schematische Darstellung eines Einbauzugs umfassend die Straßenbaumaschine und die mobile Versorgungsmaschine,
- Fig. 5 eine schematische Darstellung des Einbauzugs von Figur 4 in einem Andockzustand,
- Fig. 6 eine schematische Darstellung eines Einbauzugs, umfassend die Straßenbaumaschine und die mobile Versorgungsmaschine,
- Fig. 7 eine schematische Darstellung des Einbauzugs von Figur 6 in einem Andockzustand.

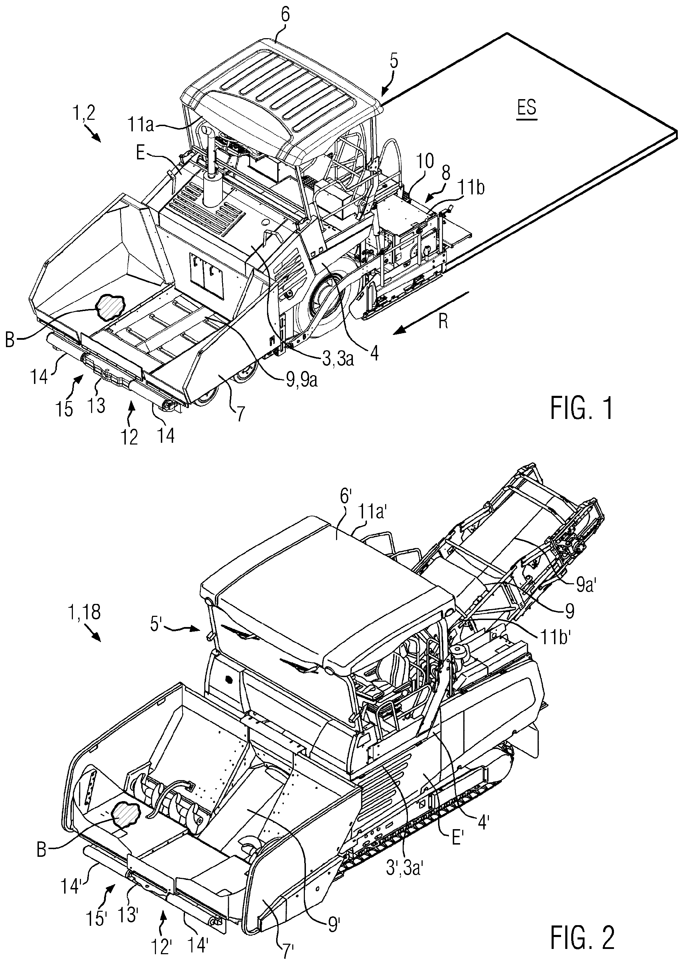

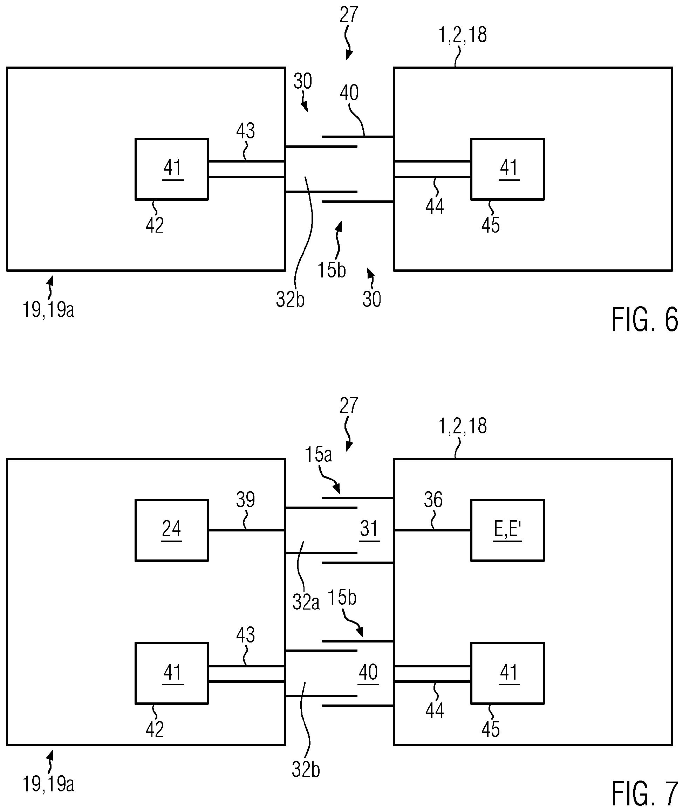

Nur die Figuren 6 und 7 zeigen Ausführungsformen der Erfindung. Die Figuren 1 bis 5 dienen lediglich der Hintergrundinformation.

Figur 1 zeigt in perspektivischer Ansicht von schräg vorne eine Straßenbaumaschine 1, bei der es sich um einen Straßenfertiger 2 zur Herstellung eines Straßenbelags ES handelt. Der Straßenfertiger 2 ist selbstfahrend, in einer Fahrtrichtung R. Der Straßenfertiger 2 weist ein Primärantrieb 3 auf. Der Primärantrieb 3 des Straßenfertigers 2 ist ein Elektromotor 3a. Der Elektromotor 3a ist durch einen Energiespeicher E des Straßenfertigers 2 elektrisch versorgt. Der Straßenfertiger 2 weist des Weiteren ein Chassis 4, einen Bedienstand 5, ein Fahrerdach 6, einen Materialbunker 7 zur Aufnahme eines Einbaumaterials B (Asphaltmischgut), eine an dem Chassis 4 höhenverstellbar gelagerte und in einer Fahrtrichtung R geschleppte Einbaubohle 8, und eine Fördereinheit 9 umfassend ein Förderband 9a, um das Einbaumaterial B aus dem Materialbunker 7 des Straßenfertigers 2 der Einbaubohle 8 mittels einer Querverteilervorrichtung 10 der Straßenbaumaschine 1 zur Verfügung zu stellen, auf.

Der Straßenfertiger 2 verfügt über mindestens einen elektrischen Verbraucher 11. Ein erster elektrischer Verbraucher 11a ist eine Beleuchtung zum Beleuchten der Umgebung oder des Bedienstands 5. Ein zweiter elektrischer Verbraucher 11b ist eine Heizung zum Heizen der Einbaubohle 8. Die Einbaubohle 8 umfasst Komponenten wie z.B. Verdichtungsaggregate (Glättbleche, Tamper und Pressleisten (nicht gezeigt). Durch die Einwirkung des Eigengewichts des Verdichtungsaggregats wird das Einbaumaterial B verdichtet. Um zu verhindern, dass das Einbaumaterial B an den Komponenten der Einbaubohle 8 festklebt, können in diese Komponenten Heizeinrichtungen (nicht gezeigt) integriert werden.

Der Straßenfertiger 2 umfasst eine Schubeinrichtung 12 für ein ruckloses Andocken z.B. mit einem Materialzulieferfahrzeug (nicht gezeigt in der Figur 1). Am mittleren Abschnitt der Schubeinrichtung 12 ist eine Kupplungsvorrichtung 13 vorgesehen, welche direkt mit einem nicht gezeigten Materialzulieferfahrzeug verbindbar ist. Außerdem sind an der Schubeinrichtung 12 Andockelemente 14 angeordnet. Die Andockelemente 14 sind als drehbar gelagerte Schubrollen vorgesehen. Die Andockelemente 14 kommen beim Andocken z.B. mit einem heranfahrenden Materialzulieferfahrzeug in Kontakt und ermöglichen ein ruckloses Voranschieben des Materialzulieferfahrzeugs.

An der Kupplungsvorrichtung 13 ist eine (erste) Schnittstelle 15 vorgesehen. Die Schnittstelle 15 ist eine elektromechanische Einheit, die für elektrische Energieübertragung und für mechanische Kopplung geeignet ist.

Figur 2 zeigt in perspektivischer Ansicht von schräg vorne eine Straßenbaumaschine 1, bei der es sich um ein Beschickerfahrzeug 18 zum Fördern von Einbaumaterial B zu einem hinterherfahrenden Straßenfertiger 2 handelt. Das Beschickerfahrzeug 18 ist selbstfahrend und umfasst einen Primärantrieb 3'. Der Primärantrieb 3' der Straßenbaumaschine 1 ist ein Elektromotor 3a'. Der Elektromotor 3a' wird durch einen Energiespeicher E' des Beschickerfahrzeugs 18 elektrisch versorgt. Das Beschickerfahrzeug 18 umfasst ein Chassis 4', einen Bedienstand 5', ein Fahrerdach 6', einen Materialbunker 7' zur Aufnahme des Einbaumaterials B, sowie eine Fördereinheit 9' umfassend ein Förderband 9a', um das Einbaumaterial B' aus dem Materialbunker 7' des Beschickerfahrzeugs 18 in den Materialbunker 7' des Straßenfertigers 2 zu transportieren.

Das Beschickerfahrzeug 18 verfügt über mindestens einen elektrischen Verbraucher 11'. Ein erster elektrischer Verbraucher 11a' ist eine Beleuchtung zum Beleuchten der Umgebung oder den Bedienstand 5'. Ein zweiter elektrischer Verbraucher 11b' ist eine Heizeinrichtung zum Heizen des Förderbands 9a'.

Das Beschickerfahrzeug 18 umfasst eine Schubeinrichtung 12' für ein ruckloses Andocken z.B. an einem Materialzulieferfahrzeug (nicht gezeigt in der Figur 2). Am mittleren Abschnitt der Schubeinrichtung 12' ist eine Kupplungsvorrichtung 13' vorgesehen, welche direkt mit einem nicht gezeigten Materialzulieferfahrzeug verbindbar ist. Außerdem sind an der Schubeinrichtung 12' Andockelemente 14' angeordnet. Die Andockelemente 14' sind als drehbar gelagerte Schubrollen vorgesehen. Die Andockelemente 14' kommen beim Andocken z.B. an einem heranfahrenden Materialzulieferfahrzeug in Kontakt und ermöglichen ein ruckloses Voranschieben des Materialzulieferfahrzeugs.

An der Kupplungsvorrichtung 13' ist eine Schnittstelle 15' vorgesehen. Die Schnittstelle 15' ist eine elektromechanische Einheit, die für elektrische Energieübertragung und für mechanische Kopplung geeignet ist.

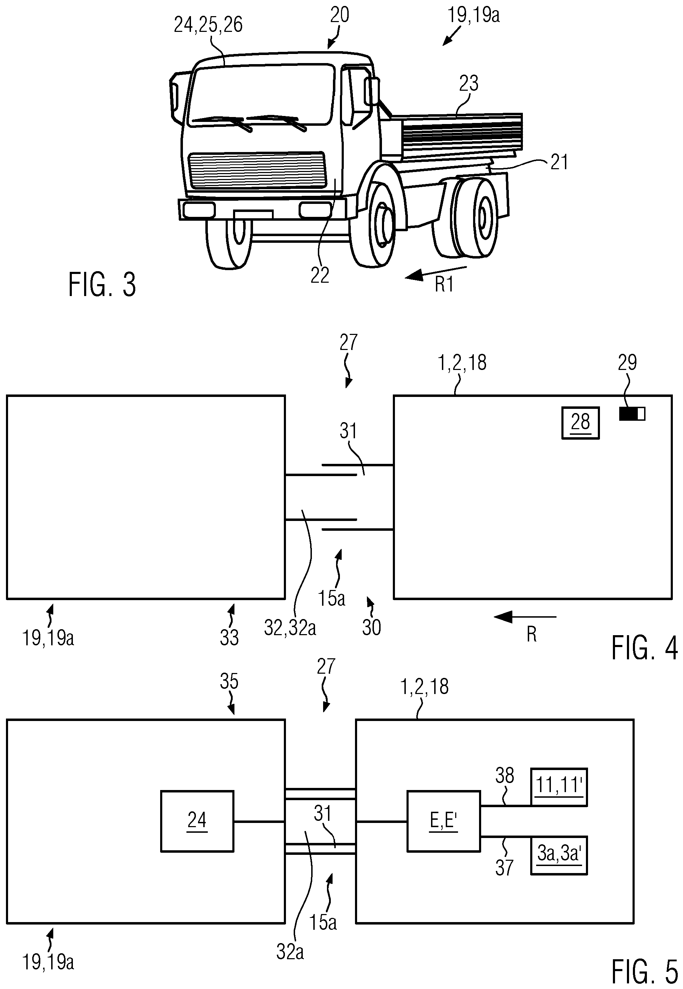

Figur 3 zeigt eine schematische Perspektivansicht einer mobilen Versorgungsmaschine 19, bzw. eines Materialzulieferfahrzeugs 19a in Form eines Lastkraftwagens bzw. eines Kipperfahrzeugs oder Muldenkippers. Die mobile Versorgungsmaschine 19 ist selbstfahrend. Die mobile Versorgungsmaschine 19 umfasst einen Fahrerbedienstand 20 sowie ein Fahrgestell 21 und einen Primärantrieb 22. Der Primärantrieb 22 kann ein Elektromotor, ein Wasserstoffmotor, ein Verbrennungsmotor oder eine Brennstoffzelle bzw. ein Wasserstoffverbrennungsmotor sein. Der Primärantrieb 22 kann ein Hybridantrieb umfassend mindestens zwei von den zuvor genannten unterschiedlichen Antrieben sein. Die mobile Versorgungsmaschine 19 umfasst zur Einbaumaterialübergabe eine Materialmulde 23. Die Materialmulde 23 ist kippbar. Die mobile Versorgungsmaschine 19 umfasst einen Energiespeicher 24, der austauschbar und ladefähig ist. Der Energiespeicher 24 kann in einem Energiespeichermodul 25 angeordnet sein, welches mehrere Energiespeicher 24 umfasst. Der Energiespeicher 24, bzw. das Energiespeichermodul 25 ist beispielsweise an einer Beifahrerstelle 26 des Fahrerbedienstands 20 befestigt, so dass die Energiespeicher 24 von einer Beifahrereingangsrichtung (entgegen einer Fahrtrichtung R1 der mobilen Versorgungsmaschine 19) einfach erreichbar und austauschbar sind.

Figur 4 zeigt eine schematische Darstellung eines Einbauzugs 27, umfassend die Straßenbaumaschine 1 in Form des Straßenfertigers 2 oder des Beschickerfahrzeugs 18 und die mobile Versorgungsmaschine 19. Der Einbauzug 27 ist in einer Fahrtrichtung R des Straßenfertigers 2 fahrbar. Die mobile Versorgungsmaschine 19 wird rückwärts (entgegen der Fahrtrichtung R) langsam an die Straßenbaumaschine 1 herangefahren und angedockt, wenn die Straßenbaumaschine 1 mit Einbaumaterial und/oder mit elektrischer Energie versorgt wird.

Über ein Steuerungssystem 28 der Straßenbaumaschine 1 wird ein (elektrischer) Ladestand 29 des Energiespeichers E, E' der Straßenbaumaschine 1 überwacht. Wenn der Ladestand 29 zwischen zwanzig Prozent und neunzig Prozent ist, wird dem Energiespeicher E, E' der Straßenbaumaschine elektrische Energie zugeführt.

Die Straßenbaumaschine 1 umfasst an einem Andockende 30 bzw. an der Kupplungsvorrichtung 13, 13' eine erste Schnittstelle 15a. Die erste Schnittstelle 15a ist eine elektromechanische Einheit, die für elektrische Energieübertragung geeignet ist. Die erste Schnittstelle 15a, bzw. elektromechanische Einheit der Straßenbaumaschine 1 umfasst eine erste Öffnung 31 für die Aufnahme einer Verbindungseinheit 32, bzw. einer ersten Verbindungseinheit 32a der mobilen Versorgungsmaschine 19 für die elektrische Energieübertragung. Die erste Verbindungseinheit 32a ist eine elektromechanische Einheit. Die erste Verbindungseinheit 32a ist an einer Andockseite 33, bzw. an einem Abwurfende 34 der mobilen Versorgungsmaschine 19 angeordnet. Wenn die erste Verbindungseinheit 32a an der ersten Schnittstelle 15a angeschlossen ist, wird elektrische Energie von dem Energiespeicher 24 der mobilen Versorgungsmaschine 19 auf die Straßenbaumaschine 1 übertragen.

Figur 5 zeigt eine schematische Darstellung des Einbauzugs 27 in einem Andockzustand 35, bzw. Energieübertragungszustand, bei dem die mobile Versorgungsmaschine 19 an der Straßenbaumaschine 1 angedockt ist. In dieser Position ist die mobile Versorgungsmaschine 19 an der Straßenbaumaschine 1 mechanisch und elektrisch angeschlossen. Beim Andocken werden die Andockelemente 14, 14' gegen die Reifen (nicht gezeigt) der mobilen Versorgungsmaschine 19 gedrückt. In dem Andockzustand 35 wird der Energiespeicher E, E' der Straßenbaumaschine 1 elektrisch aufgeladen. Des Weiteren ist die erste Schnittstelle 15a der Straßenbaumaschine 1 mit der ersten Verbindungseinheit 32a der mobilen Versorgungsmaschine 19 mechanisch verbunden. So ist es möglich, dass die heranfahrende Straßenbaumaschine 1 die mobile Versorgungsmaschine 19 in die Fahrtrichtung R verschiebt.

Der Energiespeicher E, E' der Straßenbaumaschine 1 ist über einen ersten Stromversorgungspfad 36 mit der ersten Schnittstelle 15a der Straßenbaumaschine 1 verbunden.

Von dem Energiespeicher E, E' der Straßenbaumaschine 1 führen zwei gesonderte Stromversorgungspfade 37, 38 weg. In einem zweiten Stromversorgungspfad 37 versorgt der Energiespeicher E den Elektromotor 3a, 3a' der Straßenbaumaschine 1. In einem dritten Stromversorgungspfad 38 versorgt der Energiespeicher E, E' der Straßenbaumaschine 1 direkt den elektrischen Verbraucher 11, 11' der Straßenbaumaschine 1 mit Strom.

Die erste Verbindungseinheit 32a der mobilen Versorgungsmaschine 19 ist über einen vierten Stromversorgungspfad 39 mit dem Energiespeicher 24 der mobilen Versorgungsmaschine 19 verbunden.

In dem Andockzustand 35 ist es auch möglich, die Materialmulde 23 der mobilen Versorgungsmaschine 19 in einen Kippzustand zu bringen und den Materialbunker 7, 7' der Straßenbaumaschine 1 mit Einbaumaterial B, B' zu beladen (nicht gezeigt).

Figur 6 zeigt den Einbauzug 27 in einer anderen Ausführungsform. Die Straßenbaumaschine 1 umfasst an dem Andocksende 30, bzw. an der Kupplungsvorrichtung 13, 13' eine zweite Schnittstelle 15b. Die zweite Schnittstelle 15b umfasst eine zweite Öffnung 40 zur Aufnahme von Energiemittel 41 sowie Kraftstoff, Diesel, Erdgas, Wasserstoff oder zum Betreiben der galvanischen Zellen erforderliche Flüssigkeiten, von der mobilen Versorgungsmaschine 19. Die mobile Versorgungsmaschine 19 umfasst eine zweite Verbindungseinheit 32b zur Übertragung von Energiemittel 41 auf die Straßenbaumaschine 1. Die zweite Verbindungseinheit 32b ist eine elektromechanische Einheit. Die zweite Verbindungseinheit 32b ist an der Andockseite 33, bzw. an dem Abwurfende der mobilen Versorgungsmaschine 19 angeordnet. Das Energiemittel 41 wird von der mobilen Versorgungsmaschine 19 auf die Straßenbaumaschine 1 transportiert, wenn die mobile Versorgungseinheit 19 in dem Andockzustand 35 ist. Die zweite Schnittstelle 15b wird an die zweite Verbindungseinheit 32b angeschlossen, um von der mobilen Versorgungsmaschine 19 Energiemittel 41 auf die Straßenbaumaschine 1 zu übertragen. Energiemittel 41 wird von einem Energiemittelbehälter 42 der mobilen Versorgungsmaschine 19 über ein Rohr 43 zu der zweiten Verbindungseinheit 32b zugeführt. Energiemittel 41 wird über eine Leitung (Röhre) 44 einem Energiemitteltank 45 der Straßenbaumaschine 1 zugeführt.

Figur 7 zeigt den Einbauzug 27 in einer anderen Ausführungsform. Die Straßenbaumaschine 1 umfasst in diesem Ausführungsbeispiel an dem Andocksende 30, bzw. an der Kupplungsvorrichtung 13, 13' zwei Schnittstellen, die erste Schnittstelle 15a zur Energieübertragung von der mobilen Versorgungseinheit 19 und die zweite Schnittstelle 15b zur Übertragung von Energiemittel 41 von der mobilen Versorgungseinheit 19. Dementsprechend umfasst die mobile Versorgungseinheit 19 die erste Verbindungseinheit 32a und die zweite Versorgungseinheit 32b. Die Funktionsweise dieser Einheiten ist oben erläutert.

## Patentansprüche

1. Straßenbaumaschine (1) in Form eines Straßenfertigers (2) oder eines Beschickerfahrzeugs (18) zum Fördern von Einbaumaterial (B, B') zu einem Straßenfertiger (2), wobei die Straßenbaumaschine (1) selbstfahrend ist und ein Primärantrieb (3, 3'), einen Materialbunker (7, 7'), mindestens einen elektrischen Verbraucher (11, 11') sowie mindestens einen Energiemitteltank aufweist,
wobei die Straßenbaumaschine (1) über eine Schnittstelle (15b) zur Übertragung von Energiemittel (41), bevorzugt Kraftstoff, Diesel, Erdgas, Wasserstoff oder zum Betreiben der galvanischen Zellen erforderliche Flüssigkeiten, mit einer mobilen Versorgungsmaschine (19) verbindbar ist, wobei über die Schnittstelle (15b) Energiemittel von einem Energiemitteltank der mobilen Versorgungsmaschine auf den Energiemitteltank der Straßenbaumaschine (1) übertragbar ist,
**dadurch gekennzeichnet, dass** die Schnittstelle (15b) an einem Andockende (30) der Straßenbaumaschine (1), bevorzugt an einer Schubeinrichtung (12, 12') der Straßenbaumaschine (1), angeordnet ist.

2. Straßenbaumaschine nach Anspruch 1, **dadurch gekennzeichnet, dass** die Straßenbaumaschine (1) von der mobilen Versorgungsmaschine (19) mit Einbaumaterial beladbar ist.

3. Straßenbaumaschine nach Anspruch 1 oder Anspruch 2, **dadurch gekennzeichnet, dass** die Straßenbaumaschine (1) über eine weitere Schnittstelle (15a) zur Übertragung von elektrischer Energie mit der mobilen Versorgungsmaschine (19) verbindbar ist, wobei die Straßenbaumaschine (1) mindestens einen Energiespeicher (E, E') aufweist.

4. Straßenbaumaschine nach Anspruch 3, **dadurch gekennzeichnet, dass** die weitere Schnittstelle (15a) an einem Andockende (30) der Straßenbaumaschine (1), bevorzugt an einer Schubeinrichtung (12, 12') der Straßenbaumaschine (1), angeordnet ist.

5. Straßenbaumaschine nach einem der vorangehenden Ansprüche, **dadurch gekennzeichnet, dass** die Straßenbaumaschine (1) über die weitere Schnittstelle (15a) und/oder über die Schnittstelle (15b) mit der mobilen Versorgungsmaschine (19) mechanisch verbindbar ist, so dass die Straßenbaumaschine (1) an die mobile Versorgungsmaschine (19) Kraft übertragen kann.

6. Straßenbaumaschine nach einem der vorangehenden Ansprüche, **dadurch gekennzeichnet, dass** die weitere Schnittstelle (15a) und/oder die Schnittstelle (15b) jeweils eine Öffnung (31, 40) zur Aufnahme einer Verbindungseinheit der mobilen Versorgungsmaschine (19) aufweist.

7. Einbauzug (27) umfassend mindestens eine Straßenbaumaschine (1) gemäß Anspruch 1 wobei der Einbauzug (27) eine mobile Versorgungsmaschine (19) mit mindestens einer Verbindungseinheit (32b) aufweist, wobei die Schnittstelle (15b) der Straßenbaumaschine (1) mit der Verbindungseinheit (32b) der mobilen Versorgungsmaschine (19) zur Energiemittelübertragung verbindbar ist.

8. Einbauzug nach Anspruch 7, **dadurch gekennzeichnet, dass** die mobile Versorgungsmaschine (19) ein Materialzulieferfahrzeug (19a), insbesondere ein Materialzulieferfahrzeug (19a) zur Lieferung von Einbaumaterial (B, B') ist.

9. Einbauzug nach Anspruch 7 oder 8, **dadurch gekennzeichnet, dass** die Schnittstelle (15b) und die Verbindungseinheit (32b) zusammengehörige elektromechanische Einheiten sind.

10. Einbauzug nach einem der Ansprüche 7 bis 9, **dadurch gekennzeichnet, dass** eine weitere Schnittstelle (15a) der Straßenbaumaschine (1) und eine weitere Verbindungseinheit (32a) der mobilen Versorgungsmaschine (19) miteinander zur Übertragung von elektrischer Energie verbindbar sind.

11. Verfahren zum Betreiben eines Einbauzugs umfassend mindestens eine Straßenbaumaschine (1) gemäß Anspruch 1, Einbauzug (27) eine mobile Versorgungsmaschine (19), bevorzugt eine mobile Versorgungsmaschine (19) mit einer Materialmulde (23) zur Lieferung von Einbaumaterial (B, B') auf die Straßenbaumaschine, aufweist, wobei das Verfahren umfasst:
- Verbinden der Schnittstelle (15b) der Straßenbaumaschine (1) mit einer Verbindungseinheit (32b) der mobilen Versorgungsmaschine (19) zur Übertragung von Energiemittel, bevorzugt Kraftstoff, Diesel, Erdgas, Wasserstoff oder zum Betreiben der galvanischen Zellen erforderliche Flüssigkeiten, auf die Straßenbaumaschine (1) von der mobilen Versorgungsmaschine (19).

12. Verfahren nach Anspruch 11, das weiterhin umfasst
- Verbinden einer weiteren Schnittstelle (15a) der Straßenbaumaschine (1) und einer weiteren Verbindungseinheit (32a) der mobilen Versorgungsmaschine (19) miteinander zur Übertragung von elektrischer Energie auf die Straßenbaumaschine (1) von der mobilen Versorgungsmaschine (19).

13. Verfahren nach Anspruch 12, das weiterhin umfasst,
- Überwachen von einem Ladestand (29) eines Energiespeichers (E, E') der Straßenbaumaschine (1),
- Übertragen von elektrischer Energie von der mobilen Versorgungsmaschine (19) auf die Straßenbaumaschine (1), wenn der Ladestand (29) zwischen zwanzig Prozent und neunzig Prozent, bevorzugt zwischen dreißig Prozent und achtzig Prozent ist.

14. Verwendung einer Schnittstelle (15b) einer Straßenbaumaschine (1) gemäß Anspruch 1 zu einer mechanischen Verkopplung mit einer Verbindungseinheit (32b) einer mobilen Versorgungsmaschine (19) für Energiemittelübertragung.

## Claims

1. Road-making machine (1) designed as a road finisher (2) or a loading vehicle (18) for supplying paving material (B, B') to a road finisher (2) wherein the road-making machine (1) is self-propelled and comprises a main drive (3, 3'), a hopper (7, 7') for materials, at least one electric load (11, 11') and at least one tank for propellant, wherein the road-making machine (1) can be coupled to a mobile supplying machine (19) via an interface (15b) for transferring a propellant (41), preferably fuel, diesel, natural gas, hydrogen or liquids required for operating galvanic cells, wherein via the interface (15b) propellant from a propellant tank of the mobile supplying machine can be transferred to the propellant tank off the road-making machine (1), **characterized in that** the interface (15b) is arranged at a docking end (30) of the road-making machine (1), preferably at a moving means (12, 12') of the road-making machine (1).

2. Road-making machine according to claim 1, **characterized in that** paving materials can be supplied to the road-making machine (1) by the mobile supplying machine (19).

3. Road-making machine according to claim 1 or claim 2, **characterized in that** the road-making machine can be coupled to the mobile supplying machine (19) via a further interface (15a) for transferring electric energy, wherein the road-making machine (1) includes at least one energy storage (E, E').

4. Road-making machine according to claim 3, **characterized in that** the further interface (15a) is arranged at a docking end (30) of the road-making machine (1), preferably at a moving means (12, 12') of the road-making machine (1).

5. Road-making machine according to any one of the preceding claims, **characterized in that** the road-making machine (1) can be mechanically coupled to the mobile supplying machine (19) via the further interface (15a) and/or the interface (15b) so that the road-making machine (1) can transfer power to the mobile supplying machine (19).

6. Road-making machine according to any one of the preceding claims, **characterized in that** the further interface (15a) and/or the interface (15b) each comprise a port (31, 40) for receiving a coupling unit of the mobile supplying machine (19).

7. Pave train (27) comprising at least one road-making machine (1) according to claim 1, wherein the pave train (27) includes a mobile supplying machine (19) having at least one coupling unit (32b), wherein the interface (15b) of the road-making machine (1) can be coupled to the coupling unit (32b) of the mobile supplying machine (19) for transferring a propellant.

8. Road-making machine according to claim 7, **characterized in that** the mobile supplying machine (19) is a vehicle (19a) for supplying material, in particular a vehicle (19a) for supplying paving material (B, B').

9. Pave train according to claim 7 or 8, **characterized in that** the interface (15b) and the coupling unit (32b) are the associated electromechanical units.

10. Pave train according to anyone of claims 7 through 9, **characterized in that** a further interface (15a) of the road-making machine (1) and a further coupling unit (32a) of the mobile supplying machine (19) can be coupled to each other for transferring electric energy.

11. Method for operating a pave train comprising at least one road-making machine (1) according to claim 1, wherein the pave train (27) includes a mobile supplying machine (19), preferably a mobile supplying machine (19) having a trough (23) for materials for supplying paving material (B, B') to the road-making machine, wherein the method comprises:
- coupling the interface (15b) of the road-making machine (1) to a coupling unit (32b) of the mobile supplying machine (19) for transferring a propellant, preferably fuel, diesel, natural gas, hydrogen or liquids required for operating galvanic cells, from the mobile supply machine (19) to the road-making machine (1).

12. Method according to claim 11, further comprising
- coupling a further interface (15a) off the road-making machine (1) to a further coupling unit (32a) of the mobile supplying machine (19) for transferring electric energy from the mobile supply machine (19) to the road-making machine (1).

13. Method according to claim 12, further comprising
- monitoring the charge level (29) of an energy storage (E, E') of the road-making machine (1),
- transferring electric energy from the mobile supply machine (19) to the road-making machine (1) when the charge level (29) is between 20% and 90%, preferably between 30% and 80%.

14. Use of an interface (15b) of a road-making machine (1) according to claim 1 for mechanically coupling to a coupling unit (31b) of a mobile supplying machine (19) for transferring a propellant.

## Revendications

1. Machine de construction routière (1) sous la forme d'un finisseur (2) ou d'un chargeur mobile (18) pour transporter un matériau de pose (B, B') vers un finisseur (2), dans laquelle la machine de construction routière (1) est automotrice et comporte un entraînement principal (3, 3'), une trémie à matériau (7, 7'), au moins un consommateur électrique (11, 11'), ainsi qu'au moins un réservoir de source d'énergie, dans laquelle la machine de construction routière (1) peut être connectée à une machine d'alimentation mobile (19) via une interface (15b) pour le transfert de la source d'énergie (41), de préférence du carburant, du diesel, du gaz naturel, de l'hydrogène ou des liquides nécessaires au fonctionnement des piles galvaniques, dans laquelle la source d'énergie peut être transférée d'un réservoir de source d'énergie de la machine d'alimentation mobile au réservoir de source d'énergie de la machine de construction routière (1) via l'interface (15b),
**caractérisée en ce que** l'interface (15b) est agencée à une extrémité d'amarrage (30) de la machine de construction routière (1), de préférence à un dispositif de poussée (12, 12') de la machine de construction routière (1).

2. Machine de construction routière selon la revendication 1, **caractérisée en ce que** la machine de construction routière (1) peut être chargée de matériau de pose par la machine d'alimentation mobile (19).

3. Machine de construction routière selon la revendication 1 ou 2, **caractérisée en ce que** la machine de construction routière (1) peut être connectée à la machine d'alimentation mobile (19) via une interface additionnelle (15a) pour la transmission d'énergie électrique, dans laquelle la machine de construction routière (1) comporte au moins un dispositif de stockage d'énergie (E, E').

4. Machine de construction routière selon la revendication 3, **caractérisée en ce que** l'interface additionnelle (15a) est agencée à une extrémité d'amarrage (30) de la machine de construction routière (1), de préférence à un dispositif de poussée (12, 12') de la machine de construction routière (1).

5. Machine de construction routière selon l'une des revendications précédentes, **caractérisée en ce que** la machine de construction routière (1) peut être connectée mécaniquement à la machine d'alimentation mobile (19) via l'interface additionnelle (15a) et/ou via l'interface (15b), de sorte que la machine de construction routière (1) puisse transmettre de la puissance à la machine d'alimentation mobile (19).

6. Machine de construction routière selon l'une des revendications précédentes, **caractérisée en ce que** l'interface additionnelle (15a) et/ou l'interface (15b) comportent chacune une ouverture (31, 40) pour recevoir une unité de connexion de la machine d'alimentation mobile (19).

7. Train de pose (27) comprenant au moins une machine de construction routière (1) selon la revendication 1, dans lequel le train de pose (27) comporte une machine d'alimentation mobile (19) avec au moins une unité de connexion (32b), dans lequel l'interface (15b) de la machine de construction routière (1) est connectable à l'unité de connexion (32b) de la machine d'alimentation mobile (19) pour le transfert d'une source d'énergie.

8. Train de pose selon la revendication 7, **caractérisé en ce que** la machine d'alimentation mobile (19) est un véhicule d'approvisionnement en matériau (19a), en particulier un véhicule d'approvisionnement en matériau (19a) pour la fourniture de matériau de pose (B, B').

9. Train de pose selon la revendication 7 ou 8, **caractérisé en ce que** l'interface (15b) et l'unité de connexion (32b) sont des unités électromécaniques associées.

10. Train de pose selon l'une des revendications 7 à 9, **caractérisé en ce qu'**une interface additionnelle (15a) de la machine de construction routière (1) et une unité de connexion additionnelle (32a) de la machine d'alimentation mobile (19) peuvent être connectées entre elles pour la transmission d'énergie électrique.

11. Procédé de fonctionnement d'un train de pose comprenant au moins une machine de construction routière (1) selon la revendication 1, dans lequel le train de pose (27) comporte une machine d'alimentation mobile (19), de préférence une machine d'alimentation mobile (19) avec une trémie à matériau (23) pour alimenter la machine de construction routière en matériau de pose (B, B'), dans lequel le procédé comprend :
- la connexion de l'interface (15b) de la machine de construction routière (1) à une unité de connexion (32b) de la machine d'alimentation mobile (19) pour le transfert d'une source d'énergie, de préférence du carburant, du diesel, du gaz naturel, de l'hydrogène ou des liquides nécessaires au fonctionnement des cellules galvaniques, à la machine de construction routière (1) à partir de la machine d'alimentation mobile (19).

12. Procédé selon la revendication 11, comprenant en outre
- la connexion d'une interface additionnelle (15a) de la machine de construction routière (1) à une unité de connexion additionnelle (32a) de la machine d'alimentation mobile (19) pour le transfert d'énergie électrique de la machine d'alimentation mobile (19) à la machine de construction routière (1).

13. Procédé selon la revendication 12, comprenant en outre :
- la surveillance du niveau de charge (29) d'un dispositif de stockage d'énergie (E, E') de la machine de construction routière (1),
- le transfert d'énergie électrique de la machine d'alimentation mobile (19) à la machine de construction routière (1) quand le niveau de charge (29) est compris entre vingt pourcent et quatre-vingt-dix pourcent, de préférence entre trente pourcent et quatre-vingt pourcent.

14. Utilisation d'une interface (15b) d'une machine de construction routière (1) selon la revendication 1 pour un couplage mécanique à une unité de connexion (32b) d'une machine d'alimentation mobile (19) pour une transmission de source d'énergie.
